# EUROPEAN PATENT SPECIFICATION

(11) **EP 2 104 307 B1**
(45) Date of publication and mention of the grant of the patent: **12.02.2014**
(21) Application number: 08153102.2
(22) Date of filing: 20.03.2008
(51) Int. Cl.: H04L 29/06, H04L 29/08

(54) **Secure user-specific information transmission to a personal network server**
Sichere benutzerspezifische Informationsübertragung auf einen persönlichen Netzwerkserver
Transmission d'informations sécurisées spécifiques à l'utilisateur sur un serveur de réseau personnel

(43) Date of publication of application: 23.09.2009
(73) Proprietor: Vodafone Holding GmbH, 40213 Düsseldorf (DE)
(72) Inventor: Yang, Lu, D- 40489 Düsseldorf (DE); Wild, Peter, D- 47807 Krefeld (DE); Dawes, Peter, GB- Swindon, SN1 5JU (DE)
(74) Representative: Weisbrodt, Bernd

(56) References cited:
- 3GPP TS 23.259 V1.2.0 (2007-11): "3rd Generation Partnership Project; Technical Specification Group Services and System Aspects; Personal Network Management (PNM); Procedures and Information Flows; Stage 2 (Release 8)" ETSI STANDARDS, [Online] 12 November 2007 (2007-11-12), pages 1-37, XP002491967 Retrieved from the Internet: URL:http://www.3gpp.org/ftp/Specs/html-inf o/23259.htm>
- "Digital cellular telecommunications system (Phase 2+); Universal Mobile Telecommunications System (UMTS); Generic Authentication Architecture (GAA); Generic bootstrapping architecture (3GPP TS 33.220 version 7.10.0 Release 7); ETSI TS 133 220" ETSI STANDARDS, LIS, SOPHIA ANTIPOLIS CEDEX, FRANCE, vol. 3-SA3, no. V7.10.0, 1 January 2008 (2008-01-01), XP014040715 ISSN: 0000-0001

## Description

### Technical Field of the Invention

The present invention relates to a method for transmitting confidential user-specific information between a home subscriber server and a personal network management server of a personal network in an IMS domain of a mobile network, which information contains a private user identity of a mobile station used for a mobile station registration utilising the personal network.

Furthermore the present invention relates to a corresponding system for transmitting confidential user-specific information between a home subscriber server and a personal network management server of a personal network in an IMS domain of a mobile network, which information contains a private user identity of a mobile station used for a mobile station registration utilising the personal network.

### Background Art of the Invention

A third generation mobile network, for example a mobile network according to the UMTS- (Universal Mobil Telecommunication System) standard, comprises a circuit switched (CS) subsystem for circuit switched connections, a packet switched (PS) subsystem transmitting data packets and a Internet Protocol Multimedia Subsystem (IMS). In the UMTS these subsystems or areas are also referred to as domains and are provided by the core network (core network domain) of the mobile network.

The IMS domain provides IP (Internet Protocol) based multimedia services. In particular the IMS domain provides access to internet services like internet telephony, internet radio and internet television for mobile subscribers. With the IMS a combined platform for real time services and other services is created and a convergence of CS and PS network elements is introduced. New services can be set up quickly and facile in the IMS using application servers. The IMS domain has access to a Home Subscriber Server (HSS) comprised by the mobile network. The HSS maintains user profiles and service profiles and is responsible for user authentication and access authorisation in the mobile network or for services provided by the mobile network. The IMS is an international standardised network architecture for telecommunication networks according to the 3GPP (Third Generation Partnership Project) and is known by those skilled in the art, for example from the specification "3GPP TS 23.228 V8.2.0: IP multimedia subsystem; Stage 2 (2007-09)".

For utilisation of services via the IMS a mobile subscriber subscribes to a provider and obtains a private user identity (IMPI = IP Multimedia Private User Identifier) and one ore more public user identities (IMPU = IP Multimedia Public User Identifier). With the private user identity the subscriber registers to the IMS domain for utilisation of services via the IMS domain. Usually, a private user identity is allocated to a SIM (Subscriber Identification Module) card and hence to a mobile station using the SIM card. For example a private user identity can contain a 15-digit IMSI (International Mobile Subscriber Identification). Public user identities are used by any subscriber for requesting communications to other subscribers. For example the addresses are provided as SIP (Session Initiation Protocol) addresses. Public user identities are described in section 4.3.3.1 of the specification 3GPP TS 23.228 V8.2.0.

Nowadays more and more mobile subscribers possess two or more mobile stations with different capabilities and an increasing number of devices in the private area of a mobile subscriber such as domestic appliances, alarm systems and audio video units provide interfaces enabling a connection to a mobile station or a home network. Thus, so-called personal or private networks (PN) with a management device (PNM: Personal Network Management) are provided in a mobile network to facilitate the application and administration of the different mobile stations and network-compatible devices for a user.

By means of the PNM a networking with all mobile stations and network-capable devices belonging to one user is established and managed using the conventional connections provided by the mobile network. A configuration of the PNM can be accomplished by the user or by an operator of the mobile network. For example a personal network enables a forwarding of received messages to the most suitable mobile station with respect to the data format of the message and/or with respect to the users' PN settings. Personal networks are known to those who are skilled in the art and specified, for example, in the specifications "3GPP TS 22.259 V8.3.0: Service requirements for Personal Network Management (PNM); Stage 1 (2006-06)" and "3GPP TS 23.259 V1.2.0: Personal Network Management (PNM), Procedures and Information Flows; Stage 2 (2007-11)".

In the specification "3GPP TS 23.259 V1.2.0: Personal Network Management (PNM), Procedures and Information Flows; Stage 2 (2007-11)" a transmission of a private user identity from a home subscriber server to a personal network management server during a registration of a mobile station to a personal network is described.

The specification "ETSI TS 133 220 V7.10.0: Digital cellular telecommunications system (Phase 2+); UMTS; Generic Authentication Architecture (GAA); Generic bootstrapping architecture (2007-11)" describes security features and a mechanism to bootstrap authentication and key agreement for application security in a 3GPP environment.

While a user registers a mobile station to a personal network utilising the personal network usually confidential user-specific information is requested from a home subscriber server in the mobile network and transmitted from the home subscriber server to the PNM via the mobile network and associated networks like the internet, optionally. At the PNM the confidential user-specific information is used for user authentication and authorisation. In doing so has the disadvantage that confidential user-specific information such as a private user identity is transmitted to the PNM in plain text. This leads to a significant security risk, because an unauthorised person can obtain confidential user-specific information and misuse this information.

### Disclosure of the invention

The object of the present invention is to alleviate the drawback described above and to provide a secure and reliable transmission of confidential user-specific information from a home subscriber server to a management server of a personal network during a registration of a mobile station to the personal network.

According to the present invention the object is achieved in that a method as described in the beginning for transmitting confidential user-specific information between a home subscriber server and a personal network management server of a personal network in an IMS domain of a mobile network, which information contains a private user identity of a mobile station used for a mobile station registration utilising the personal network, comprises the steps of
a) providing a digital key to the home subscriber server and to the personal network management server used for encrypting and decrypting the private user identity, the digital key being a random number with same length of bits as the private user identity;
b) encrypting the private user identity at the home subscriber server, wherein the data format and the data length of the encrypted private user identity corresponds to the data format and the data length of the not encrypted private user identity;
c) transmitting a register request including the private user identity and a public user identity from the mobile station to a register unit in a call session control unit of the IMS domain requesting registration to the personal network;
d) receiving the register request from the mobile station at the register unit in the call session control unit of the mobile network requesting a registration to the personal network;
e) interrogating the home subscriber server by the call session control unit of the IMS domain for user-specific information containing the encrypted private user identity and an address and/or name of the personal network management server;
f) transmitting the encrypted private user identity from the home subscriber server to the personal network management server via the call session control unit, wherein the encrypted private user identity received from the home subscriber server and the public user identity received from the mobile station is forwarded from the call session control unit to the personal network management server within a third party register request;
g) decrypting the received encrypted private user identity at the personal network management server;
h) registration of the mobile station to the personal network by the personal network management server using the decrypted private user identity and the public user identity.

Furthermore, the object is achieved with a corresponding system according to claim 5.

The basic principle of the present invention is to provide encrypted confidential user-specific information at the home subscriber server and transmit the encrypted confidential user-specific information to the personal network management server for a registration of a mobile station to the personal network. In doing so the confidential user-specific information is always passed to the personal network management server encrypted and hidden respectively.

The confidential user-specific information comprises a private user identity of the mobile station. The private user identity is designed for authentication and authorisation of a mobile station and a user respectively to the IMS domain of a mobile network. Thus the private user identity is particularly suitable for an authentication and authorisation during registration to a personal network. Furthermore some services provided by the personal network require the private user identity. By transmitting the encrypted private user identity to the personal network management server the security and the reliability of using the personal network services is increased.

The data format and the data length of the encrypted private user identity correspond to the data format and the data length of the not encrypted private user identity. As a result the private user identity is hidden in the encrypted private user identity, which has the appearance of a not encrypted usual private user identity. Thus, the encrypted private user identity is transmittable with all data streams, transmission devices and methods comprising a private user identity without any expensive and cumbersome changes.

The method according to the present invention is based therein, that a digital key is provided to the home subscriber server and to the personal network management server used for encrypting and decrypting the confidential user-specific information. The digital key is used by an encryption module generating encrypted confidential user-specific information and by a decryption module decoding the encrypted user-specific information. In doing so, a symmetric or an asymmetric encryption can be accomplished. By using an encryption module together with a digital key a very secure encryption is obtained. Furthermore, different digital keys can be used for different users or for one user successively with the same encrypting module and decrypting module. This significantly reduces the installation effort and allows varying the encryption in a facile manner.

In the device according to the present invention a key generator is provided in the mobile network providing a digital key to the home subscriber server and to the personal network management server for encrypting and decrypting confidential user-specific information. As in the corresponding method the digital key is used by the encryption module and the decryption module for encrypting and decrypting the user-specific information symmetrically or asymmetrically. Thus a secure encryption is obtained with different digital keys for different users or for one user successively using the same encrypting and decrypting module. The installation and maintenance effort is reduced significantly and the encryption is easy customisable to different users.

For example, the call session control unit can be realised by a S-CSCF (Serving - Call Session Control Function) server in the IMS domain. As well known in the art a S-CSCF server is responsible for user registration, session state management and interaction with service platforms in the IMS domain. With the aforementioned steps a forwarding of an encrypted private user identity and a public user identity to the personal network management server during a registration of a mobile station to the personal network is achieved in a secure and effective manner.

Hence the method and the corresponding device according to the present invention eliminate the privacy concerns caused by transmitting confidential user-specific information in plain text using an insecure interface between the home subscriber server and the personal network management server. A user is able to register his mobile station to a personal network in a secure manner without the risk of revealing confidential information. Thus a fraudulent usage of confidential user-specific information is prevented effectively.

Preferably, the digital key has a limited period of validity in an embodiment of the method for transmitting confidential user-specific information according to the present invention. For example the period of validity can be limited to the duration of one registration or to a certain amount of days, weeks or months. In doing so the security of the encryption is increased substantially, because unauthorised attempts encrypting confidential user-specific information are prevented with each renewal of the digital key. Another advantageous embodiment of the method for transmitting confidential user-specific information according to the present invention comprises the steps of
a) transmitting the received encrypted private user identity from the personal network management server to the home subscriber server;
b) transmitting at least one public user identity assigned to the encrypted private user identity by the home subscriber server from the home subscriber server to the personal network management server; and
c) verifying the public user identity received from the call session control unit using the public user identity received from the home subscriber server by the personal network management server during a registration of the mobile station to the personal network.

Using these steps a very effective verification of the public user identity received from the mobile station via the call session control unit is achieved at the personal network management server. For example the personal network management server can verify whether the received public user identity is masqueraded or not. Masqueraded identifiers are often used in local networks like home networks. The encrypted private user identity is returned to the home subscriber server enhancing the data security during the verification. Hence, with this embodiment the reliability of using the personal network services is increased substantially.

In a further advantageous embodiment of the method for transmitting confidential user-specific information according to the present invention a bitwise XOR function is used for encryption and decryption of the confidential user-specific information. The bitwise XOR function is a very common bitwise operation provided by computers and stand-alone chips. Therefore an encryption using a bitwise XOR operation with data to be encrypted and a digital key is accomplished in a very easy and inexpensive manner.

Further embodiments and advantages result from the subject matter of the sub-claims as well as the drawing with the accompanying description.

In the following one non limiting example of an embodiment according to the present invention is described in detail referring to the annexed drawing.

### Brief Description of the Drawing

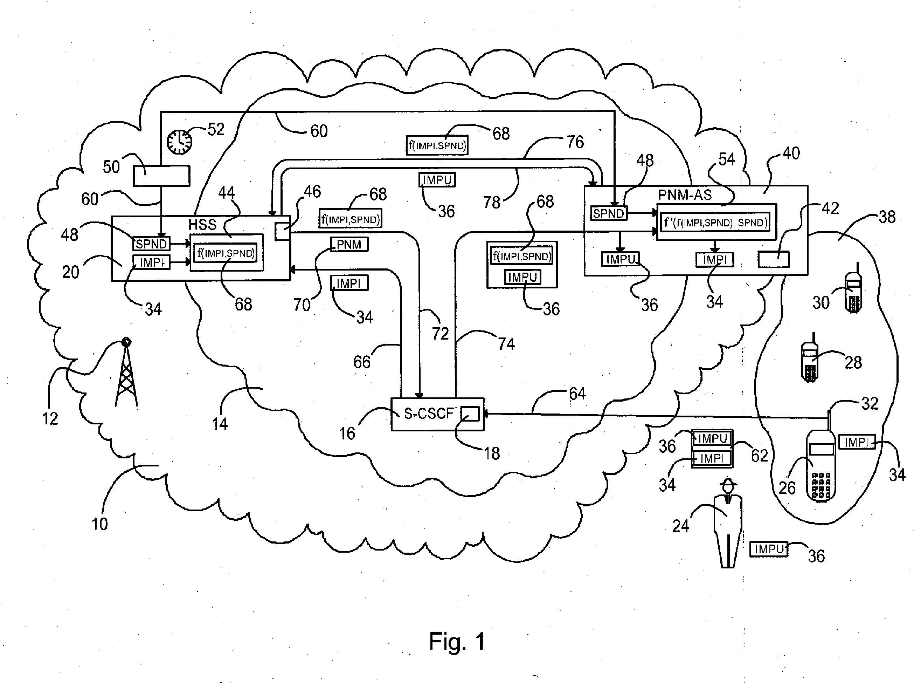

- Fig. 1: schematically shows an embodiment of a method and a device of the present invention transmitting confidential user-specific information between a home subscriber server and a personal network management server.

### Description of a Preferred Embodiment

Referring now to Fig. 1 a mobile network is shown and designated by the numeral 10. For example, the mobile network 10 accords to the GSM/GPRS, UMTS, CDMA2000, FOMA, TD-SCDMA or WiMAX standard or a fourth generation standard. These mobile networks with the corresponding elements and functions are well known by those who are skilled in the art. To simplify matters the mobile network 10 is shown stylised as a cloud in Fig. 1 including a radio mast 12. The mobile network 10 comprises an Internet Protocol Multimedia Subsystem (IMS) domain 14 integrating and providing IP-based multimedia services and other services for users.

The IMS domain 14 contains a call session control unit 16 for user registration to and call state and session state administration of the IMS domain 14. In this embodiment the call session control unit 16 is implemented as an S-CSCF SIP proxy (Serving - Call Session Control Function Session Initiation Protocol server). Therefore in the following the call session control unit 16 is referred to as S-CSCF 16 for simplicity. The S-CSCF 16 comprises a register unit 18 for registration of mobile stations to the IMS domain 14. Furthermore the mobile network 10 comprises a Home Subscriber Server (HSS) 20 accessible from the IMS domain 16. The HSS 20 maintains user profiles and service profiles and is responsible for user authentication and access authorisation at the mobile network 10 or for services provided by the mobile network 10. The S-CSCF 16 and the HSS 20 are well known components of a mobile network described above.

Further on a user 24 of the mobile network 10 is shown in Fig. 1. The user 24 exemplary has three devices 26, 28, 30, which are able to transmit or receive voice or other data over a telecommunication network or public data network. At least the device 26 is a mobile station 26. For example, the mobile station 26 can be a mobile phone, a car phone, a smart phone, a fixed computer (e.g. PC) or a mobile computer (e.g. Notebook, PDA) or a other device with a built in or plugged on radio interface module 32 (e.g. PMCCIA card), or a device connected to a mobile station via an interface and using the mobile station for communication. The mobile station 26 is IMS-capable and enables a user to communicate via the mobile network 10 and to use services via the IMS domain 14. The other devices 28 and 30 can be, for example, mobile stations, stationary telephone systems or computers connected to a telecommunication network or the internet.

For utilisation of the IMS domain 14 the mobile station 26 is provided with a private user identity (IMPI: IP Multimedia Private User Identifier) 34. The IMPI 34 is used for registration to the IMS domain 14 utilising IMS domain services. To be reachable for other users or services over the IMS domain 14 the user 24 is provided with one or more public user identities (IMPU: IP Multimedia Public Identifier - User ID) 36. The IMPU 36 represents a public user address and is device-independent. The IMPI 34 and the IMPU 36 are provided to the HSS 20 and the mobile station 26 during IMS service provisioning.

The mobile station 26 and the other devices 28 and 30 have different features and capabilities. They can also be used in different places like at home, in an office or on the road. To simplify the usage, maintenance and coordination of the mobile station 26 and the other devices 28, 30 a personal network 38 comprising the mobile station 26 and the other devices 28, 30 is established using the IMS domain 14. For this purpose a personal network management server 40 is provided as an application server in the IMS domain 14. In the following the personal network management server 40 is also referred to as PNM-AS (Personal Network Management - Application Server) 40. The PNM-AS 40 establishes and administrates the personal network 38 and enables communication and forwarding of calls and sessions between the mobile station 26 and the other devices 28, 30. Thereto the real transmission of data in the personal network 38 is accomplished by conventional connections provided by the mobile network 10 or other telecommunication networks or data networks. The IMPI 34 of the mobile station 26 is provided to the PNM-AS 40 during personal network service provisioning. The PNM-AS 40 also comprises a registration device 42 for registration of mobile stations to the personal network 38 utilising personal network services using the IMPI 34 for authentication and authorisation. Personal network management services are provided to the user 24 by the PNM-AS 40.

For a secure transmission of confidential user-specific information like the IMPI 34 the HSS 20 comprises an encryption module 44 and transmitter device 46 transmitting encrypted confidential user-specific information to the PNM-AS 40. The encrypting module 44 encrypts user-specific information using a digital key 48 exemplary named SPND (Subscriber Personal Network Data) 48. The SPND (digital key) 48 is generated by a digital key generator 50 provided in the mobile network 10. For example the digital key 48 can be a random number with same bit length as the IMPI 34 and is generated by a random number generator comprised in the digital key generator 50. The digital key 48 can have a limited period of validity controlled by a timer 52 in the mobile network 10.

The decryption of the encrypted confidential user-specific information received at the PNM-AS 40 is done by a decryption module 54 comprised by the PNM-AS 40.

In the following the functionality of the aforementioned devices and the steps of the method according to the embodiment are described in detail.

In order to achieve a secure transmission of the IPMI 34 from the HSS 20 to the PNM-AS 40 for a registration of the mobile station 26 to the personal network 28 first of all a SPND (digital key) 48 is generated by the digital key generator 50 and provided to the HSS 20 and the PNM-AS 40 by means of personal network management services provisioning, arrows 60. The SPND (digital key) 48 is a random number with same length of bits as the corresponding IPMI 34 and is either uniquely generated for the whole personal network management services or individually generated for each subscription of a personal network user 24.

When the user 24 wants to use the personal network services provided by the PNM-AS 40 with his mobile station 26, he sends (arrow 64) a SIP register request 62 containing the IMPI 34 and the IMPU 36 from the mobile station 26 to the register unit 18 in the S-CSCF 16. The S-CSCF 16 interrogates the HSS 20 for user information by forwarding (arrow 66) at least the IMPI 34 in a query to the HSS 20, e.g. using a Cx interface. Optionally the IMPU 36 is also forwarded to the HSS 20 in the query.

On receiving the query the HSS 20 immediately encrypts the IMPI 34 or provides a pre-encrypted IMPI 68 using the encrypting module 44. The encrypting module 44 encrypts the IMPI 34 using a function with the IMPI 34 and the SPND (digital key) 48 as parameters. Hence the encrypted IMPI 68 is also referred to as f(IMPI, SPND) 68 in Fig. 1. For example the function can be a bitwise XOR. Additionally the bits of the IMPI 34 can be shifted before executing the function. The HSS 20 then transmits a response to the query containing at least the encrypted IMPI (f(IMPI, SPND)) 68 and an address 70 of the PNM-AS 40, using the transmitter device 46, arrow 72. Optionally the IMPU 36 is included in the response.

The S-CSCF 16 passes the encrypted IMPI (f(IMPI, SPND)) 68 and the IMPU 36 to the PNM-AS 40 within a third party register request 73, arrow 74. In the PNM-AS 40 the encrypted IMPI (f(IMPI, SPND)) 68 is decrypted by the decryption module 54 using the inverse function of the function used for encryption with the encrypted IMPI (f(IMPI, SPND)) 68 and the SPND (digital key) 48 as parameters. Therefore f' (f (IMPI, SPND), SPND) refers to the not encrypted IMPI 34 in Fig. 1. For example, if the bitwise XOR function is used for encryption, the bitwise XOR function is also used for decryption, because this function is an involutary function. Subsequently the IMPU 36 and the decrypted IMPI 34 are used by the registration device 42 in the PNM-AS 40 for registration of the mobile station 26 to the personal network 38 utilising personal network services. Thereby the IMPI 34 is used for authentication and authorisation of the mobile station 26 and the user 24 respectively.

Optionally the PNM-AS 40 can interrogate the HSS 20 for the IMPU 36 that is correlated to the IMPI 34 via provisioning before registration of the mobile station 26 to the personal network 38.In doing so, the PNM-AS 40 sends the received encrypted IMPI (f(IMPI, SPND)) 68 to the HSS 20, arrow 76. The HSS 20 returns the correlated IMPU 36 and other correlated IMPUs pre-configured in the HSS 20 together with the SPND 48 and the IMPI 34, arrow 78. Then the PNM-AS 40 verifies whether the returned IMPU 36 is identical to the one received from the S-CSCF 16. This interrogation provides a secure method for the PNM-AS 40 to verify if the received IMPU 36 is masqueraded or not and hence increases the reliability of using the personal network services.

Using the described embodiment the IMPI 34 is always passed to and is send from the PNM-AS 40 encrypted and hidden respectively. Hence the described embodiment overcomes the privacy concerns caused by transmitting the IMPI 34 in plain text using an insecure interface between the S-CSCF 16 and the PNM-AS 40.

## Claims

1. A method for transmitting confidential user-specific information (34) between a home subscriber server (20) and a personal network management server (40) of a personal network (38) in an IMS domain (14) of a mobile network (10), which information (34) contains a private user identity (34) of a mobile station (26) used for a mobile station (26) registration utilising the personal network (38), the method comprising the steps of
a) providing a digital key (48) to the home subscriber server (20) and to the personal network management server (40) used for encrypting and decrypting the private user identity (34), the digital key (48) being a random number with same length of bits as the private user identity (34);
b) encrypting the private user identity (34) at the home subscriber server (20), wherein the data format and the data length of the encrypted private user identity (68) corresponds to the data format and the data length of the not encrypted private user identity (34);
c) transmitting (64) a register request (62) including the private user identity (34) and a public user identity (36) from the mobile station (26) to a register unit (18) in a call session control unit (16) of the IMS domain (14) requesting registration to the personal network (38);
d) receiving (64) the register request (62) from the mobile station (26) at the register unit (18) in the call session control unit (16) of the mobile network (10) requesting a registration to the personal network (38);
e) interrogating (66, 72) the home subscriber server (20) by the call session control unit (16) of the IMS domain (14) for user-specific information (34) containing the encrypted private user identity (68) and an address (70) and/or name of the personal network management server (40),
f) transmitting (72, 74) the encrypted private user identity (34) from the home subscriber server (20) to the personal network management server (40) via the call session control unit (18), wherein the encrypted private user identity (68) received from the home subscriber server (20) and the public user identity (36) received from the mobile station (26) is forwarded (74) from the call session control unit (18) to the personal network management server (40) within a third party register request (73);
g) decrypting the received encrypted private user identity (68) at the personal network management server (40);
h) registration of the mobile station (26) to the personal network (38) by the personal network management server (40) using the decrypted private user identity (34) and the public user identity (36).

2. A method for transmitting confidential user-specific information (34) between a home subscriber server (20) and a personal network management server (40) according to claim 1 **characterised by** limiting the period of validity of the digital key (48).

3. A method for transmitting confidential user-specific information (34) between a home subscriber server (20) and a personal network management server (40) according to one of the claims 1 to 2 **characterised by** the method comprising the steps of
a) transmitting (76) the received encrypted private user identity (68) from the personal network management server (40) to the home subscriber server (20);
b) transmitting (78) at least one public user identity (36) assigned to the encrypted private user identity (68) by the home subscriber server (20) from the home subscriber server (20) to the personal network management server (40); and
c) verifying the public user identity (36) received from the call session control unit (18) using the public user identity (36) received from the home subscriber server (20) by the personal network management server (40) during said registration of the mobile station (26) to the personal network (38).

4. A method for transmitting confidential user-specific information (34) between a home subscriber server (20) and a personal network management server (40) according to one of the claims 1 to 3 **characterised by** using a bitwise XOR function for encryption and decryption of the private user identity (34).

5. A system for transmitting confidential user-specific information (34) between a home subscriber server (20) and a personal network management server (40) of a personal network (38) in an IMS domain (14) of a mobile network (10), which information (34) contains a private user identity (34) of a mobile station (26) used for a mobile station registration utilising the personal network (38), comprising
a) a key generator (50) in the mobile network (10) providing a digital key (48) being a random number with same length of bits as the private user identity (34) to the home subscriber server (20) and to the personal network management server (40) for encrypting and decrypting the private user identity (34);
b) an encrypting module (44) provided at the home subscriber server (20), adapted for encrypting the private user identity (34) into an encrypted private user identity (68), which data format and data length corresponds to the data format and the data length of the not encrypted private user identity (34);
c) a registration unit (18) in a call session control unit (16) of the IMS domain (14) for receiving a register request (62) including the private user identity (34) and a public user identity (36) from the mobile station (26) requesting a registration to the personal network (38);
d) a transmitter device (46) provided at the home subscriber server (20) transmitting the encrypted private user identity (34) from the home subscriber server (20) to the personal network management server (40), the transmitter device (46) adapted for transmitting the encrypted private user identity (68) and an address (70) of the personal network management server (40) from the home subscriber server (20) to the call session control unit (16) for forwarding to the personal network management server (40) upon a query from the call session control unit (18);
e) a decryption module (54) provided at the personal network management server (40) for decrypting the received encrypted private user identity (68).
f) a registration device (42) at the personal network management server (40) using the decrypted private user identity (34) and the pubic user identity (36) for registration of the mobile station (26) to the personal network (38);

## Patentansprüche

1. Verfahren zur Übertragung vertraulicher benutzerspezifischer Informationen (34) zwischen einem Home Subscriber Server (20) und einem persönlichen Netzwerkverwaltungsserver (40) eines persönlichen Netzwerks (38) in einer IMS-Domäne (14) eines Mobilfunknetzes (10), wobei die Informationen (34) eine private Nutzeridentität (34) einer mobilen Station (26) enthalten, welche für eine Registrierung der mobilen Station (26) unter Verwendung des persönlichen Netzwerks (38) eingesetzt wird, wobei das Verfahren die Schritte umfasst:
a) Liefern eines zum Verschlüsseln und Entschlüsseln der privaten Nutzeridentität (34) verwendeten digitalen Schlüssels (48) an den Home Subscriber Server (20) und an den persönlichen Netzwerkverwaltungsserver (40), wobei der digitale Schlüssel (48) eine zufällige Nummer mit der gleichen Länge an Bits ist wie die private Nutzeridentität (34);
b) Verschlüsseln der privaten Nutzeridentität (34) seitens des Home Subscriber Server (20), wobei das Datenformat und die Datenlänge der verschlüsselten privaten Nutzeridentität (68) dem Datenformat und der Datenlänge der nicht verschlüsselten privaten Nutzeridentität (34) entsprechen;
c) Senden (64) einer Registrierungsanfrage (62), welche die private Nutzeridentität (34) und eine öffentliche Nutzeridentität (36) umfasst, von der mobilen Station (26) an eine Registriereinheit (18) in einer Call Session Control-Einheit (16) der die Registrierung in dem persönlichen Netzwerk (38) anfragenden IMS-Domäne (14);
d) Empfangen (64) der Registrierungsanfrage (62) von der mobilen Station (26) seitens der Registriereinheit (18) in der Call Session Control-Einheit (16) des eine Registrierung in dem persönlichen Netzwerk (38) anfragenden Mobilfunknetzes (10);
e) Abfragen (66, 72) des Home Subscriber Servers (20) durch die Call Session Control-Einheit (16) der IMS-Domäne (14) nach benutzerspezifischen Informationen (34), welche die verschlüsselte private Nutzeridentität (68) und eine Adresse (70) und/oder einen Namen des persönlichen Netzwerkverwaltungsservers (40) enthalten;
f) Senden (72, 74) der verschlüsselten privaten Nutzeridentität (34) von dem Home Subscriber Server (20) an den persönlichen Netzwerkverwaltungsserver (40) über die Call Session Control-Einheit (16), wobei die von dem Home Subscriber Server (20) empfangene verschlüsselte private Nutzeridentität (68) und die von der mobilen Station (26) empfangene öffentliche Nutzeridentität (36) von der Call Session Control-Einheit (16) an den persönlichen Netzwerkverwaltungsserver (40) im Rahmen einer Anfrage zur Registrierung eines Dritten (73) weitergeleitet (74) wird;
g) Entschlüsseln der empfangenen verschlüsselten privaten Nutzeridentität (68) seitens des persönlichen Netzwerkverwaltungsservers (40);
h) Registrierung der mobilen Station (26) in dem persönlichen Netzwerk (38) durch den persönlichen Netzwerkverwaltungsserver (40) unter Verwendung der entschlüsselten privaten Nutzeridentität (34) und der öffentlichen Nutzeridentität (36).

2. Verfahren zur Übertragung vertraulicher benutzerspezifischer Informationen (34) zwischen einem Home Subscriber Server (20) und einem persönlichen Netzwerkverwaltungsserver (40) nach Anspruch 1, **gekennzeichnet durch** eine Begrenzung des Gültigkeitszeitraums des digitalen Schlüsselcodes (48).

3. Verfahren zur Übertragung vertraulicher benutzerspezifischer Informationen (34) zwischen einem Home Subscriber Server (20) und einem persönlichen Netzwerkverwaltungsserver (40) nach Anspruch 1 oder Anspruch 2, **dadurch gekennzeichnet, dass** das Verfahren die Schritte umfasst:
a) Senden (76) der empfangenen verschlüsselten privaten Nutzeridentität (68) von dem persönlichen Netzwerkverwaltungsserver (40) an den Home Subscriber Server (20);
b) Senden (78) zumindest einer öffentlichen Nutzeridentität (36), welche der verschlüsselten privaten Nutzeridentität (68) von dem Home Subscriber Server (20) zugeordnet ist, von dem Home Subscriber Server (20) an den persönlichen Netzwerkverwaltungsserver (40); und
c) Überprüfen der von der Call Session Control-Einheit (16) empfangenen öffentlichen Nutzeridentität (36) unter Verwendung der von dem Home Subscriber Server (20) empfangenen öffentlichen Nutzeridentität (36) durch den persönlichen Netzwerkverwaltungsserver (40) während der Registrierung der mobilen Station (26) in dem persönlichen Netzwerk (38).

4. Verfahren zur Übertragung vertraulicher benutzerspezifischer Informationen (34) zwischen einem Home Subscriber Server (20) und einem persönlichen Netzwerkverwaltungsserver (40) nach einem der Ansprüche 1 bis 3, **gekennzeichnet durch** die Verwendung einer bitweisen XOR-Verknüpfung zur Verschlüsselung und Entschlüsselung der privaten Nutzeridentität (34).

5. System zur Übertragung vertraulicher benutzerspezifischer Informationen (34) zwischen einem Home Subscriber Server (20) und einem persönlichen Netzwerkverwaltungsserver (40) eines persönlichen Netzwerks (38) in einer IMS-Domäne (14) eines Mobilfunknetzes (10), wobei die Informationen (34) eine private Nutzeridentität (34) einer mobilen Station (26) enthalten, welche für eine Registrierung der mobilen Station (26) unter Verwendung des persönlichen Netzwerks (38) eingesetzt wird, umfassend:
a) einen Schlüsselerzeuger (50) in dem Mobilfunknetz (10), welcher einen digitalen Schlüssel (48), der eine zufällige Nummer mit der gleichen Länge an Bits ist wie die private Nutzeridentität (34), für den Home Subscriber Server (20) und den persönlichen Netzwerkverwaltungsserver (40) bereitstellt zur Verschlüsselung und Entschlüsselung der privaten Nutzeridentität (34);
b) ein Verschlüsselungsmodul (44) welches seitens des Home Subscriber Servers (20) vorgesehen und dafür eingerichtet ist, die private Nutzeridentität (34) in eine verschlüsselte private Nutzeridentität (68) zu verschlüsseln, wobei das Datenformat und die Datenlänge dem Datenformat und der Datenlänge der nicht verschlüsselten privaten Nutzeridentität (34) entsprechen;
c) eine Registriereinheit (18) in einer Call Session Control-Einheit (16) der IMS-Domäne (14) zum Empfang einer die private Nutzeridentität (34) und eine öffentliche Nutzeridentität (36) umfassenden Registrierungsanfrage (62) von der mobilen Station (26) zum Anfragen einer Registrierung in dem persönlichen Netzwerk (38);
d) eine seitens des Home Subscriber Servers (20) vorgesehene Sendeeinrichtung (46) zum Senden der verschlüsselten privaten Nutzeridentität (34) von dem Home Subscriber Server (20) an den persönlichen Netzwerkverwaltungsserver (40), wobei die Sendeeinrichtung (46) dafür eingerichtet ist, die verschlüsselte private Nutzeridentität (68) und eine Adresse (70) des persönlichen Netzwerkverwaltungsservers (40) von dem Home Subscriber Server (20) an die Call Session Control-Einheit (16) zur Weiterleitung an den persönlichen Netzwerkverwaltungsserver (40) bei einer Anfrage von der Call Session Control-Einheit (16) zu senden;
e) ein seitens des persönlichen Netzwerkverwaltungsservers (40) vorgesehenes Entschlüsselungsmodul (54) zum Entschlüsseln der empfangenen verschlüsselten privaten Nutzeridentität (68);
f) eine Registriereinrichtung (42) seitens des persönlichen Netzwerkverwaltungsservers (40), welche die entschlüsselte private Nutzeridentität (34) und die öffentliche Nutzeridentität (36) zur Registrierung der mobilen Station (26) in dem persönlichen Netzwerk (38) verwendet.

## Revendications

1. Procédé de transmission d'informations confidentielles spécifiques à l'utilisateur (34) entre un serveur domestique d'abonné (20) et un serveur d'administration de réseau personnel (40) d'un réseau personnel (38) dans un domaine IMS (14) d'un réseau radio mobile (10), laquelle information (34) contient une identité d'utilisateur privée (34) d'une station mobile (26) utilisée pour un enregistrement de la station mobile (26) en utilisant le réseau personnel (38), le procédé comprenant les étapes de:
a) fournir un code clé digital (48) au serveur domestique d'abonné (20) et au serveur d'administration de réseau personnel (40), lequel code clé est utilisé pour crypter et déchiffrer l'identité d'utilisateur privée (34), le code clé digital étant un numéro aléatoire ayant la même longueur de bits que celle de l'identité d'utilisateur privée (34);
b) crypter l'identité d'utilisateur privée (34) dans le serveur domestique d'abonné (20), le format des données et la longueur des données de l'identité d'utilisateur privée cryptée (68) correspondant au format des données et à la longueur des données de l'identité d'utilisateur privée non-cryptée (34);
c) envoyer (64) une demande d'enregistrement (62) comprenant l'identité d'utilisateur privée (34) et une identité d'utilisateur publique (36) d'une station mobile (26) à une unité d'enregistrement (18) prévue dans une unité de commande de session d'appel (call session control unit) (16) d'un domaine IMS (14) demandant l'enregistrement dans le réseau personnel (38);
d) recevoir (64) la demande d'enregistrement (62) de la station mobile (26) à l'unité d'enregistrement (18) prévue dans l'unité de commande de session d'appel (16) du réseau radio mobile (10) demandant l'enregistrement dans le réseau personnel (38) ;
e) interroger (66, 72) le serveur domestique d'abonné (20) par l'unité de commande de session d'appel (16) du domaine IMS (14) pour des informations spécifiques à l'utilisateur contenant l'identité d'utilisateur privée cryptée (68) et une adresse (70) et/ou un nom du serveur d'administration de réseau personnel (40) ;
f) envoyer (72, 74) l'identité d'utilisateur privée cryptée (34) du serveur domestique d'abonné (20) au serveur d'administration de réseau personnel (40) via l'unité de commande de session d'appel (18), dans lequel l'identité d'utilisateur privée cryptée (68) reçue du serveur domestique d'abonné (20) et l'identité d'utilisateur publique (36) reçue de la station mobile (26) sont transmises (74) de l'unité de commande de session d'appel (16) au serveur d'administration de réseau personnel (14) au sein d'une demande d'enregistrement d'un tiers (73) ;
g) déchiffrer l'identité d'utilisateur privée cryptée (68) reçue dans le serveur d'administration de réseau personnel (40) ;
h) enregistrer la station mobile (26) dans le réseau personnel (38) par le serveur d'administration de réseau personnel (40) en utilisant l'identité d'utilisateur privée déchiffrée (34) et l'identité d'utilisateur publique (36).

2. Procédé de transmission des informations confidentielles spécifiques à l'utilisateur (34) entre un serveur domestique d'abonné (20) et un serveur d'administration de réseau personnel (40) selon la revendication 1, **caractérisé par** la limitation de la durée de validité du code clé digital (48).

3. Procédé de transmission des informations confidentielles spécifiques à l'utilisateur (34) entre un serveur domestique d'abonné (20) et un serveur d'administration de réseau personnel (40) selon l'une des revendications 1 à 2, **caractérisé par** le procédé comprenant les étapes de :
a) envoyer (76) l'identité d'utilisateur privée cryptée (68) reçue du serveur d'administration de réseau personnel (40) au serveur domestique d'abonné (20) ;
b) envoyer (78) au moins une identité d'utilisateur publique (36) attribuée à l'identité d'utilisateur privée cryptée (68) par le serveur domestique d'abonné (20) du serveur domestique d'abonné (20) au serveur d'administration de réseau personnel (40) ; et
c) vérifier l'identité d'utilisateur publique (36) reçue de l'unité de commande de session d'appel (16) en utilisant l'identité d'utilisateur publique (36) reçue du serveur domestique d'abonné (20) par le serveur d'administration de réseau personnel (40) pendant l'enregistrement de la station mobile (26) dans le réseau personnel (38).

4. Procédé de transmission des informations confidentielles spécifiques à l'utilisateur (34) entre un serveur domestique d'abonné (20) et un serveur d'administration de réseau personnel (40) selon l'une des revendications 1 à 3, **caractérisé par** l'utilisation d'une fonction XOR au niveau du bit pour crypter et déchiffrer l'identité d'utilisateur privée (34).

5. Système de transmission d'informations confidentielles spécifiques à l'utilisateur (34) entre un serveur domestique d'abonné (20) et un serveur d'administration de réseau personnel (40) d'un réseau personnel (38) dans un domaine IMS (14) d'un réseau radio mobile (10), laquelle information (34) contient une identité d'utilisateur privée (34) d'une station mobile (26) utilisée pour un enregistrement de la station mobile (26) en utilisant le réseau personnel (38), comprenant
a) un générateur de code clé (50) dans le réseau radio mobile (10) qui fournit un code clé digital (48), qui est un numéro aléatoire ayant la même longueur de bits que celle de l'identité d'utilisateur privée (34), au serveur domestique d'abonné (20) et au serveur d'administration de réseau personnel (40) pour crypter et déchiffrer l'identité d'utilisateur privée (34) ;
b) un module de cryptage (44) prévu dans le serveur domestique d'abonné (20) et adapté à crypter l'identité d'utilisateur privée (34) en une identité d'utilisateur privée cryptée (68) dont le format des données et la longueur des données correspondent au format des données et à la longueur des données de l'identité d'utilisateur privée non-cryptée (34) ;
c) une unité d'enregistrement (18) dans une unité de commande de session d'appel (16) du domaine IMS (14) pour recevoir une demande d'enregistrement (62) comprenant l'identité d'utilisateur privée (34) et une identité d'utilisateur publique (36) de la station mobile (26) demandant l'enregistrement dans le réseau personnel (38) ;
d) un dispositif de transmission (46) prévu dans le serveur domestique d'abonné (20) qui envoie l'identité d'utilisateur privée cryptée (34) du serveur domestique d'abonné (20) au serveur d'administration de réseau personnel (40), le dispositif de transmission (46) étant adapté à envoyer l'identité d'utilisateur privée cryptée (68) et une adresse (70) du serveur d'administration de réseau personnel (40) du serveur domestique d'abonné (20) à l'unité de commande de session d'appel (16) pour la transmission au serveur d'administration de réseau personnel (40) dans le cas d'une requête de l'unité de commande de session d'appel (16) ;
e) un module de déchiffrage (54) prévu dans le serveur d'administration de réseau personnel (40) pour déchiffrer l'identité d'utilisateur privée cryptée (68) reçue ;
f) un dispositif d'enregistrement (42) dans le serveur d'administration de réseau personnel (40) qui utilise l'identité d'utilisateur privée déchiffrée (34) et l'identité d'utilisateur publique (36) pour enregistrer la station mobile (26) dans le réseau personnel (38).
